# EUROPÄISCHE PATENTSCHRIFT

(11) **EP 4 334 181 B1**
(45) Veröffentlichungstag und Bekanntmachung des Hinweises auf die Patenterteilung: **05.08.2026**
(21) Anmeldenummer: 22726679.8
(22) Anmeldetag: 29.04.2022
(51) Int. Cl.: B60W 30/14, B60W 50/14, B60W 50/10, B60W 30/16, G08G 1/0962, G06V 20/56

(54) **VERFAHREN ZUM BETREIBEN EINES FAHRERASSISTENZSYSTEMS ZUR LÄNGSREGELUNG EINES FAHRZEUGS MIT PROAKTIVEM VORSCHLAG ZUR FUNKTIONSNUTZUNG, FAHRERASSISTENZSYSTEM SOWIE FAHRZEUG**
METHOD FOR OPERATING A DRIVER ASSISTANCE SYSTEM FOR LONGITUDINAL CONTROL OF A VEHICLE WITH PROACTIVE SUGGESTION FOR FUNCTIONAL USE, DRIVER ASSISTANCE SYSTEM AND VEHICLE
PROCÉDÉ DE FONCTIONNEMENT D'UN SYSTÈME D'AIDE À LA CONDUITE POUR LA RÉGULATION LONGITUDINALE D'UN VÉHICULE AVEC PROPOSITION PROACTIVE POUR UTILISATION FONCTIONNELLE, SYSTÈME D'AIDE À LA CONDUITE ET VÉHICULE

(30) Priorität: 04.05.2021 DE 102021111546
(43) Veröffentlichungstag der Anmeldung: 13.03.2024
(73) Patentinhaber: Bayerische Motoren Werke Aktiengesellschaft, 80809 München (DE)
(72) Erfinder: SPIESSL, Wolfgang, 85356 Freising (DE); KAGERER, Walter, 80939 München (DE); LECHNER, Andreas, 80807 München (DE)
(86) Internationale Anmeldenummer: PCT/EP2022/061603
(87) Internationale Veröffentlichungsnummer: WO 2022/233744

(56) Entgegenhaltungen:
- DE-A1- 102011 116 741
- DE-A1- 102012 211 967
- DE-A1- 102013 205 609
- DE-A1- 102014 017 522
- DE-A1- 102014 208 185
- DE-A1- 102016 110 298
- US-A1- 2018 079 410

## Beschreibung

Die vorliegende Erfindung betrifft ein Verfahren zum Betreiben eines Fahrerassistenzsystems eines Fahrzeugs. Darüber hinaus betrifft die vorliegende Erfindung ein Fahrerassistenzsystem für ein Fahrzeug. Schließlich betrifft die vorliegende Erfindung ein Fahrzeug mit einem derartigen Fahrerassistenzsystem.

Aus dem Stand der Technik sind unterschiedliche Fahrerassistenzsysteme bekannt, welche einen Fahrer bzw. Nutzer beim Führen des Fahrzeugs unterstützen können. Beispielsweise sind Fahrerassistenzsysteme bekannt, welche dem Fahrer die aktuell zulässige Höchstgeschwindigkeit anzeigen. Zu diesem Zweck können beispielsweise mit einer Kamera Verkehrsschilder erkannt werden. Diese Funktion kann durch die Geschwindigkeitsregelung bzw. die Längsregelung erweitert werden. Wenn beispielsweise der Fahrer bei der aktiven Geschwindigkeitsregelung eine Übernahme des Tempolimits gewählt hat, passt das Fahrerassistenzsystem die Geschwindigkeit automatisch an die Beschilderung bzw. die aktuell zulässige Höchstgeschwindigkeit an.

Darüber hinaus ist aus dem Stand der Technik die Geschwindigkeitsregelung mit Abstandsregelung bekannt. Diese Funktion kann auch als Abstandsregeltempomat (ACC - Adaptive Cruise Control) bezeichnet werden. Die Funktion misst automatisch den Sicherheitsabstand zu einem vorausfahrenden Fahrzeug und passt die Fahrergeschwindigkeit entsprechend an. Auch bei dieser Geschwindigkeitsregelung kann die aktuell zulässige Höchstgeschwindigkeit berücksichtigt werden bzw. das Tempolimit übernommen werden. Darüber hinaus wird es dem Fahrer ermöglicht, die Sollgeschwindigkeit, welche für die Geschwindigkeitsregelung bzw. die Längsregelung verwendet wird, über eine entsprechende Bedieneingabe anzupassen.

Die DE 10 2011 116 741 A1 beschreibt ein Verfahren umfassend die Schritte: kontinuierliches Aufnehmen von Bilddaten geschwindigkeitsrelevanter Verkehrszeichen entlang einer Fahrstrecke des Kraftfahrzeugs mit einer Kamera, Ermitteln eines Geschwindigkeitswertes und Erzeugen eines Steuerungssignals zur Ansteuerung einer Geschwindigkeitsregelanlage mit dem Geschwindigkeitswert, Informieren des Fahrers durch eines Ausgabevorrichtung darüber, dass die automatische Geschwindigkeitsregelung durch die Geschwindigkeitsregelanlage ab diesem Zeitpunkt aktiv ist.

Ferner zeigt die DE 10 2016 110 298 A1 eine Fahrzeuggeschwindigkeitsbegrenzungsvorrichtung. Falls erfasst wird, dass sich eine Geschwindigkeitsbegrenzung geändert hat, schaltet eine Fahrzeuggeschwindigkeitsobergrenzeneinstell-ECU einen Regelungsmodus vorübergehend von einem Normalmodus in einen Anfragemodus. Eine ASL-Bedieneinheit dient als eine Funktion für eine Änderungsbedienung einer Fahrzeuggeschwindigkeitsobergrenze im Normalmodus und dient als Funktion für eine Antwortbedienung im Anfragemodus, ob die Geschwindigkeitsbegrenzung akzeptiert wird. Wird die ASL-Bedieneinheit im Normalmodus bedient, schaltet die Fahrzeuggeschwindigkeitsobergrenzeneinstell-ECU den Regelungsmodus nicht in den Anfragemodus um, selbst wenn eine Änderung einer Geschwindigkeitsbegrenzung erfasst wird, bis ein bestimmter Zeitabschnitt seit der Bedienung abgelaufen ist.

Zudem offenbart die DE 10 2014 017522 A1 ein Verfahren zum Betreiben eines Fahrerassistenzsystems, mittels welchem eine Geschwindigkeit eines Kraftwagens regelbar ist, mit einem Erfassen einer zulässigen Höchstgeschwindigkeit für einen vorgegebenen Ort durch eine Erfassungseinrichtung des Fahrerassistenzsystems, einem automatischen Setzen eines der ermittelten Höchstgeschwindigkeit entsprechenden Höchstwerts in dem Fahrerassistenzsystem und mit einem Annullieren des Setzens, falls innerhalb eines vorgegebenen Zeitintervalls nach dem Setzen oder während sich der Kraftwagen in einer vorgegebenen Umgebung des vorgegebenen Ortes befindet, eine vorbestimmte Bedienhandlung eines Fahrers des Kraftwagens erfolgt, um einen fälschlicherweise erfolgenden Regeleingriff eines Fahrerassistenzsystems eines Kraftwagens zu vermeiden.

Außerdem beschreibt die DE 10 2014 208185 A1 ein ACC-System und Verfahren zur Regelung der Fahrgeschwindigkeit eines Fahrzeuges, das auch bei erkannter Betätigung einer Fahrzeugbremse durch den Fahrer aktiv gehalten wird, falls eine kritische Annäherung des Fahrzeuges an ein anderes davor befindliches Objekt durch eine Annäherungserkennungseinheit des ACC-Systems erkannt wird.

Insgesamt werden dem Fahrer im Zusammenhang mit der Längsregelung bzw. der Geschwindigkeitsregelung unterschiedliche Funktionen zur Verfügung gestellt bzw. angeboten. Dies kann zur Folge haben, dass der Fahrer verwirrt wird und/oder die Funktionen nicht wie gewollt bedienen kann.

Es ist daher Aufgabe der vorliegenden Erfindung, eine Lösung aufzuzeigen, wie ein Fahrer bei der Nutzung eines Fahrerassistenzsystems zur Längsregelung eines Fahrzeugs der eingangs genannten Art auf einfache und zuverlässige Weise unterstützt werden kann. Darüber hinaus soll ein Fahrzeug mit einem derartigen Assistenzsystem bereitgestellt werden.

Diese Aufgabe wird erfindungsgemäß gelöst durch ein Verfahren, durch ein Fahrerassistenzsystem sowie durch ein Fahrzeug mit den Merkmalen gemäß den unabhängigen Ansprüchen. Vorteilhafte Weiterbildungen der vorliegenden Erfindung sind in den abhängigen Ansprüchen angegeben.

Ein erfindungsgemäßes Verfahren dient zum Betreiben eines Fahrerassistenzsystems eines Fahrzeugs. Das Verfahren umfasst das Erfassen einer zulässigen Höchstgeschwindigkeit für die Fahrbahn, auf welcher sich das Fahrzeug aktuell bewegt bzw. aktuell befindet. Darüber hinaus umfasst das Verfahren das Erfassen von einer durch einen Fahrer des Fahrzeugs durchgeführten ersten Bedienhandlung zur Aktivierung einer Längsregelung des Fahrzeugs. Ferner umfasst das Verfahren das Durchführen der Längsregelung, wobei eine Sollgeschwindigkeit des Fahrzeugs während der Längsregelung der zulässigen Höchstgeschwindigkeit entspricht. Außerdem umfasst das Verfahren das Analysieren einer zweiten Bedienhandlung des Fahrers, welche nach der ersten Bedienhandlung durchgeführt wird. Des Weiteren umfasst das Verfahren das Ausgeben eines Hinweises an den Fahrer, falls anhand der Analyse der zweiten Bedienhandlung erkannt wird, dass der Fahrer durch die zweite Bedienhandlung eine Anpassung der Sollgeschwindigkeit vornehmen möchte bzw. wünscht.

Mit Hilfe des Fahrerassistenzsystems soll die Längsregelung des Fahrzeugs ermöglicht werden. Dabei kann die Geschwindigkeit des Fahrzeugs bzw. die Längsgeschwindigkeit des Fahrzeugs auf eine Sollgeschwindigkeit bzw. Wunschgeschwindigkeit geregelt werden. Zusätzlich kann es vorgesehen sein, dass bei der Längsregelung der Abstand zu einem vorausfahrenden Fahrzeug gemessen wird und die aktuelle Geschwindigkeit des Fahrzeugs während der Längsregelung an den Abstand angepasst wird. Ferner ist vorgesehen, dass bei der Längsregelung die Sollgeschwindigkeit des Fahrzeugs der zulässigen Höchstgeschwindigkeit entspricht. Die zulässige Höchstgeschwindigkeit bzw. die erlaubte Höchstgeschwindigkeit betrifft dabei die Fahrbahn, auf welcher sich das Fahrzeug auch aktuell bewegt. Die zulässige Höchstgeschwindigkeit beschreibt insbesondere die für das Fahrzeug aktuell gültige Höchstgeschwindigkeit. Die zulässige Höchstgeschwindigkeit kann auch als Tempolimit bezeichnet werden. Um die zulässige Höchstgeschwindigkeit bestimmen zu können, können mittels einer Kamera des Fahrerassistenzsystems entsprechende Verkehrsschilder, Hinweisschilder, Anzeigen von Verkehrsleitsystemen, Schilderbrücken oder dergleichen erfasst werden. Darüber hinaus können zum Bestimmen der zulässigen Höchstgeschwindigkeit digitale Kartendaten herangezogen werden.

Um die Längsregelung des Fahrzeugs zu aktivieren, kann von dem Fahrer bzw. dem Nutzer des Fahrzeugs die erste Bedienhandlung durchgeführt werden. Bei dieser ersten Bedienhandlung kann der Fahrer beispielsweise eine entsprechende Bedientaste betätigen. Diese Bedientaste kann bevorzugt an dem Lenkrad des Fahrzeugs angeordnet sein. Sobald der Fahrer die erste Bedienhandlung durchführt bzw. die Bedientaste drückt, wird die Längsregelung des Fahrzeugs aktiviert, wobei die Sollgeschwindigkeit bei der Längsregelung der aktuellen zulässigen Höchstgeschwindigkeit bzw. dem Tempolimit entspricht.

Bei der Aktivierung der Längsregelung des Fahrzeugs kann sich der Fall ergeben, dass der Fahrer die Längsregelung mit der Übernahme des Tempolimits eigentlich gar nicht aktivieren wollte. Dies kann beispielsweise der Fall sein, wenn die aktuelle Geschwindigkeit des Fahrzeugs von der zulässigen Höchstgeschwindigkeit abweicht. In diesem Fall kann der Fahrer beispielsweise davon ausgehen, dass bei der Aktivierung der Längsregelung die Sollgeschwindigkeit der aktuellen Geschwindigkeit des Fahrzeugs und nicht der zulässigen Höchstgeschwindigkeit entspricht. Darüber hinaus kann sich der Fall ergeben, dass der Fahrer vor der Durchführung der ersten Bedienhandlung die Funktion der Längsregelung mit der Übernahme des Tempolimits gar nicht gekannt hat.

Es ist daher erfindungsgemäß vorgesehen, dass eine zweite Bedienhandlung des Fahrers analysiert wird, welche nach der ersten Bedienhandlung durchgeführt wird. Dabei kann die zweite Bedienhandlung mehrere einzelne Bedienschritte umfassen. Ein solcher Bedienschritt kann beispielsweise das Betätigen eines Bedienelements, das Betätigen einer Bedientaste, das Durchführen einer Spracheingabe, das Durchführen einer Bediengeste, das Betätigen eines Fahrpedals, das Betätigen eines Bremspedals oder dergleichen sein. Wenn die zweite Bedienhandlung mehrere einzelne Bedienschritte umfasst, können diese insbesondere innerhalb einer vorbestimmten Zeitdauer nach der ersten Bedienhandlung durchgeführt werden.

Zudem wird ein Hinweis an den Fahrer ausgegeben, falls anhand der Analyse der zweiten Bedienhandlung erkannt wird, dass der Fahrer durch die zweite Bedienhandlung eine Anpassung der Sollgeschwindigkeit vornehmen möchte. Es soll also eine Art Mustererkennung durchgeführt werden, um das Nutzerverhalten bzw. die zweite Bedienhandlung zu analysieren. Durch die Analyse der zweiten Bedienhandlung soll erkannt werden, dass der Fahrer im Nachgang bzw. nach der Aktivierung der Längsregelung Korrekturen vornimmt bzw. vornehmen möchte. Insbesondere soll erkannt werden, dass der Fahrer durch die Längsregelung mit der Übernahme des Tempolimits bzw. der zulässigen Höchstgeschwindigkeit gar nicht aktivieren wollte bzw. diese Einstellung gar nicht vornehmen wollte. Falls dies auf Grundlage der Analyse der zweiten Bedienhandlung erkannt wird, kann der Hinweis an den Fahrer ausgegeben werden. Durch diesen Hinweis kann der Fahrer bei der Nutzung des Fahrerassistenzsystems mit der Längsregelung unterstützt werden.

Erfindungsgemäß wird die zweite Bedienhandlung mit einer Referenz-Bedienhandlung zur Anpassung der Sollgeschwindigkeit verglichen und der Hinweis wird ausgegeben, falls die Anpassung der Sollgeschwindigkeit durch die Referenz-Bedienhandlung im Vergleich zu der zweiten Bedienhandlung durch eine geringere Anzahl von Bedienschritten und/oder innerhalb einer geringeren Zeitdauer erreicht wird. Wie zuvor erläutert, wird die zweite Bedienbehandlung des Fahrers nach der Aktivierung der Längsregelung mit der Übernahme der zulässigen Höchstgeschwindigkeit untersucht. Hierbei soll erkannt werden, ob es eine einfachere Möglichkeit gibt, die von dem Fahrer gewünschte Einstellung bzw. Anpassung vorzunehmen.

Es wird davon ausgegangen, dass der Fahrer durch die zweite Bedienhandlung die Sollgeschwindigkeit für die Längsregelung anpassen möchte. Dabei wird insbesondere die vorbestimmte Referenz-Bedienhandlung berücksichtigt. Diese Referenz-Bedienhandlung beschreibt diejenige Bedienhandlung bzw. den zumindest einen Bedienschritt, der für die Anpassung der Sollgeschwindigkeit eigentlich vorgesehen ist. Diese Referenz-Bedienhandlung kann beispielsweise von dem Hersteller des Fahrzeugs bzw. des Fahrerassistenzsystems vorgegeben sein. Wenn nun die zweite Bedienhandlung von dieser Referenz-Bedienhandlung abweicht bzw. wenn die zweite Bedienhandlung eine größere Anzahl an Bedienschritten und/oder eine längere Zeitdauer in Anspruch nimmt, wird dem Fahrer der Hinweis ausgegeben. Mit anderen Worten wird dem Fahrer nur dann der Hinweis ausgegeben, wenn der Fahrer bzw. der Nutzer auch unterstützt werden kann.

Hierbei ist es insbesondere vorgesehen, dass der Hinweis, welcher an den Fahrer ausgegeben wird, die Referenz-Bedienhandlung beschreibt. Somit kann dem Fahrer beispielsweise angezeigt werden, wie er die Sollgeschwindigkeit für die Längsregelung auf einfache Weise bzw. innerhalb einer kurzen Zeitdauer anpassen kann. Dem Fahrer kann somit eine Anleitung bereitgestellt werden, wie der die Sollgeschwindigkeit anpassen kann. Alternativ oder zusätzlich kann es vorgesehen sein, dass dem Fahrer bei dem Hinweis die mit der ersten Bedienhandlung verknüpfte Funktion bzw. Funktionalität erläutert wird. Dem Fahrer kann also angezeigt werden, welche Funktion bei der ersten Bedienhandlung bzw. der Betätigung der Bedientaste aktiviert wird. Auf diese Weise kann beispielsweise einem Fahrer, dem die Längsregelfunktion nicht vertraut ist, eine Anleitung zur korrekten Nutzung der Funktion bereitgestellt werden.

In einer weiteren Ausführungsform wird der Hinweis ausgegeben, falls die zweite Bedienhandlung innerhalb einer vorbestimmten Zeitdauer nach der ersten Bedienhandlung durchgeführt wird und/oder falls die zweite Bedienhandlung zum wiederholten Mal nach der ersten Bedienhandlung durchgeführt wird. Es soll also insbesondere ein zeitlicher Zusammenhang zwischen der ersten Bedienhandlung bzw. der Betätigung der Bedientaste und der nachfolgenden zweiten Bedienhandlung bzw. der Verstellung der Sollgeschwindigkeit erkannt werden. Dabei kann der Hinweis nur dann ausgegeben werden, falls die zweite Bedienhandlung innerhalb der vorbestimmten Zeitdauer, welche beispielsweise 10 Sekunden betragen kann, nach der ersten Bedienhandlung durchgeführt wird.

Alternativ oder zusätzlich kann überprüft werden, ob die zweite Bedienhandlung wiederholt, beispielsweise dreimal hintereinander, nach dem jeweiligen Durchführen der ersten Bedienhandlung durchgeführt wird. Auch in diesem Fall kann der Hinweis nur dann ausgegeben werden, wenn die zweite Bedienhandlung zum wiederholten Mal nach der ersten Bedienhandlung durchgeführt wird. Auf diese Weise kann erkannt werden, dass eine offensichtliche Falschnutzung der Bedientaste, welche der ersten Bedienhandlung zugeordnet ist, vorliegt. Somit kann der Hinweis auch nur dann ausgegeben werden, wenn der Fahrer bzw. Nutzer tatsächlich Unterstützung benötigt.

In einer weiteren Ausführungsform wird dem Fahrer bei der Ausgabe des Hinweises eine Anpassung der Sollgeschwindigkeit um einen vorbestimmten Geschwindigkeitswert vorgeschlagen. Wenn erkannt wird, dass der Fahrer bei der zweiten Bedienhandlung die Sollgeschwindigkeit für die Längsregelung anpassen möchte, kann ihm bei der Ausgabe des Hinweises eine entsprechende Anpassung der Sollgeschwindigkeit vorgeschlagen werden. Beispielsweise kann ihm der vorbestimmte Geschwindigkeitswert vorgeschlagen werden, welcher zu der erfassten zulässigen Höchstgeschwindigkeit hinzuaddiert wird oder von der erfassten zulässigen Höchstgeschwindigkeit abgezogen wird. Mit anderen Worten kann dem Fahrer beispielsweise ein entsprechender Geschwindigkeits-Offset vorgeschlagen werden, um die Sollgeschwindigkeit anpassen zu können. Dabei kann der vorbestimmte Geschwindigkeitswert einen festen Wert, beispielsweise 5 km/h, betragen. Es kann auch vorgesehen sein, dass der Geschwindigkeitswert in Abhängigkeit von zuvor durchgeführten Einstellungen des Fahrers oder einem vom Fahrer hinterlegten Geschwindigkeits-Offset bestimmt wird.

In einer weiteren Ausführungsform wird dem Fahrer bei der Ausgabe des Hinweises eine Anpassung oder die Aktivierung der mit der ersten Bedienhandlung verknüpften Längsregelung vorgeschlagen. Mit der Ausgabe des Hinweises kann dem Fahrer vorgeschlagen werden, die Funktion zur Übernahme der aktuellen Höchstgeschwindigkeit bzw. des Tempolimits zu deaktivieren. Alternativ dazu kann vorgeschlagen werden, die automatische Übernahme der erfassten Höchstgeschwindigkeit bzw. des Tempolimits zu aktivieren. Es kann zudem vorgesehen sein, dass dem Fahrer eine Anpassung der Sollgeschwindigkeit vorgeschlagen wird. Dabei kann der Fahrer beispielsweise eingeben, wie die Sollgeschwindigkeit gewählt werden soll. Beispielsweise kann der Fahrer angeben, dass die Sollgeschwindigkeit der aktuellen Geschwindigkeit des Fahrzeugs bei der Betätigung der Bedientaste bzw. bei der Durchführung der ersten Bedienhandlung entspricht. Somit kann die Sollgeschwindigkeit für die Längsregelung des Fahrzeugs individuell von dem Fahrer vorgegeben werden.

In einer weiteren Ausführungsform wird erkannt, dass der Fahrer durch die zweite Bedienhandlung die Anpassung der Sollgeschwindigkeit vornehmen möchte, falls bei der zweiten Bedienhandlung die Sollgeschwindigkeit korrigiert wird. Beispielsweise kann erkannt werden, dass nach der Übernahme des Tempolimits die Sollgeschwindigkeit manuell mehrmals hintereinander oder auch immer um den gleichen Wert, beispielsweise 5 km/h, erhöht oder erniedrigt wird. Des Weiteren kann erkannt werden, dass der Fahrer durch die zweite Bedienhandlung die Anpassung der Sollgeschwindigkeit vornehmen möchte, falls bei der zweiten Bedienhandlung ein Fahrpedal durch den Fahrer betätigt wird. Es kann also erkannt werden, dass der Fahrer die Längsregelung manuell bzw. durch die Betätigung des Fahrpedals übersteuert. Darüber hinaus wird erkannt, dass der Fahrer durch die zweite Bedienhandlung die Anpassung der Sollgeschwindigkeit vornehmen möchte, falls bei der zweiten Bedienhandlung eine automatische Veränderung der Sollgeschwindigkeit bei der Änderung der zulässigen Höchstgeschwindigkeit für die Fahrbahn bestätigt wird. Es kann vorgesehen sein, dass bei der Änderung des Tempolimits auch eine Anpassung der Sollgeschwindigkeit für die Längsregelung an das Tempolimit vorgeschlagen wird. Wenn hier jeder Vorschlag zur Übernahme des Tempolimits von dem Fahrer bestätigt wird, kann davon ausgegangen werden, dass er eine Anpassung der Sollgeschwindigkeit vornehmen möchte. Darüber hinaus kann erkannt werden, dass der Fahrer durch die zweite Bedienhandlung die Anpassung der Sollgeschwindigkeit vornehmen möchte, falls bei der automatischen Veränderung der Sollgeschwindigkeit bei einer Änderung der zulässigen Höchstgeschwindigkeit für die Fahrbahn bei der zweiten Bedienhandlung die veränderte Sollgeschwindigkeit angepasst wird. Mit anderen Worten kann also erkannt werden, dass nach der automatischen Übernahme des Tempolimits sehr häufig auf den vorherigen Wert zurückgestellt wird. Durch diese Mustererkennung bei der zweiten Bedienhandlung kann auf zuverlässige Weise erkannt werden, dass der Fahrer die Sollgeschwindigkeit für die Längsregelung anpassen möchte.

Weiterhin ist vorteilhaft, wenn eine aktuelle Geschwindigkeit des Fahrzeugs vor der ersten Bedienhandlung ermittelt wird und erkannt hat, dass der Fahrer durch die zweite Bedienhandlung die Anpassung der Sollgeschwindigkeit vornehmen möchte, falls bei der zweiten Bedienhandlung die Sollgeschwindigkeit an die aktuelle Geschwindigkeit angepasst wird. Mit anderen Worten kann die aktuelle Geschwindigkeit des Fahrzeugs vor der Betätigung der Bedientaste bzw. vor der Durchführung der ersten Bedienhandlung ermittelt werden. Wenn im Anschluss daran erkannt wird, dass nach der Übernahme der aktuellen Höchstgeschwindigkeit die Sollgeschwindigkeit manuell in die Nähe der Ist-Geschwindigkeit bzw. der aktuellen Geschwindigkeit des Fahrzeugs vor der Durchführung der ersten Bedienhandlung korrigiert wird, wird davon ausgegangen, dass der Fahrer die Sollgeschwindigkeit anpassen möchte. Hier kann davon ausgegangen werden, dass der Fahrer in der Annahme ist, dass die Sollgeschwindigkeit für die Längsregelung der aktuellen Geschwindigkeit des Fahrzeugs entspricht und nicht dem Tempolimit.

Ein erfindungsgemäßes Fahrerassistenzsystem für ein Fahrzeug ist zum Durchführen eines erfindungsgemäßen Verfahrens und der vorteilhaften Ausgestaltungen davon eingerichtet. Das Fahrerassistenzsystem kann dazu eingerichtet sein, die zulässige Höchstgeschwindigkeit für die Fahrbahn, auf welcher sich das Fahrzeug aktuell bewegt, zu erfassen. Zu diesem Zweck kann das Fahrerassistenzsystem eine Kamera oder auch einen anderen Umfeldsensor aufweisen, mittels welcher bzw. mittels welchem Verkehrsschilder oder dergleichen in der Umgebung erkannt werden können. Des Weiteren kann das Fahrerassistenzsystem einen Umfeldsensor, beispielsweise einen Radarsensor, aufweisen, mittels welchem die Abstand zu einem vorausfahrenden Fahrzeug bestimmt werden kann.

Zudem kann das Fahrerassistenzsystem dazu eingerichtet sein, eine erste Bedienhandlung zur Aktivierung einer Längsregelung des Fahrzeugs zu erfassen. Zu diesem Zweck kann das Fahrerassistenzsystem ein erstes Bedienelement aufweisen. Darüber hinaus kann das Fahrerassistenzsystem dazu eingerichtet sein, eine Längsregelung durchzuführen, wobei eine Sollgeschwindigkeit des Fahrzeugs während der Längsregelung der zulässigen Höchstgeschwindigkeit entspricht. Darüber hinaus kann das Fahrerassistenzsystem eine Recheneinrichtung aufweisen, welche dazu eingerichtet ist, eine zweite Bedienhandlung des Fahrers, welche nach der ersten Bedienhandlung durchgeführt wird, zu analysieren. Hierzu kann die Bedieneingabe an zumindest einem zweiten Bedienelement des Fahrerassistenzsystems erfasst werden. Außerdem kann das Fahrerassistenzsystem eine Ausgabeeinrichtung aufweisen, mittels welcher ein Hinweis an den Fahrer ausgegeben werden kann, falls anhand der Analyse der zweiten Bedienhandlung erkannt wird, dass der Fahrer durch die zweite Bedienhandlung eine Anpassung der Sollgeschwindigkeit vornehmen möchte.

Ein erfindungsgemäßes Fahrzeug umfasst ein erfindungsgemäßes Fahrerassistenzsystem. Das Fahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Fahrzeug.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs mit einem Fahrerassistenzsystem zur Durchführung einer Längsregelung; und
- Fig. 2: das Fahrzeug gemäß Fig. 1 in einer beispielhaften Verkehrssituation.

In den Figuren werden gleiche oder funktionsgleiche Elemente mit den gleichen Bezugszeichen versehen.

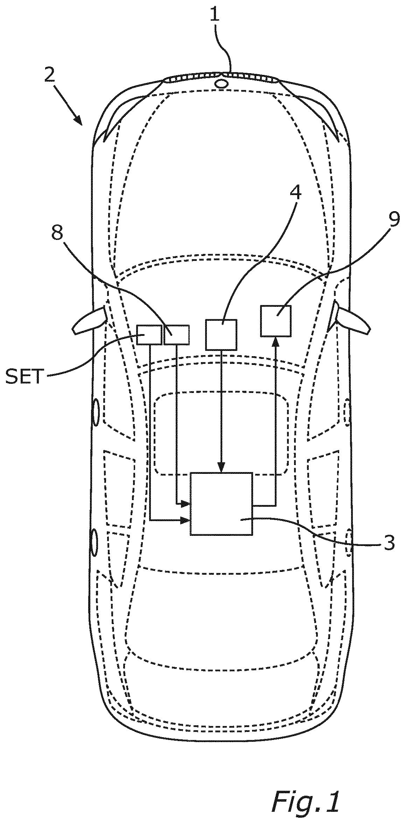

Fig. 1 zeigt ein Fahrzeug 1, welches vorliegend als Personenkraftwagen ausgebildet ist, in einer schematischen Darstellung. Das Fahrzeug 1 umfasst ein Fahrerassistenzsystem 2, mittels welchem eine Längsregelung des Fahrzeugs 1 durchgeführt werden kann. Mittels des Fahrerassistenzsystems 2 kann die Längsgeschwindigkeit des Fahrzeugs auf eine Sollgeschwindigkeit geregelt werden. Es kann zudem vorgesehen sein, dass mittels des

Fahrerassistenzsystems 2 ein Abstandsregeltempomat (ACC) unter Berücksichtigung der Sollgeschwindigkeit realisiert wird.

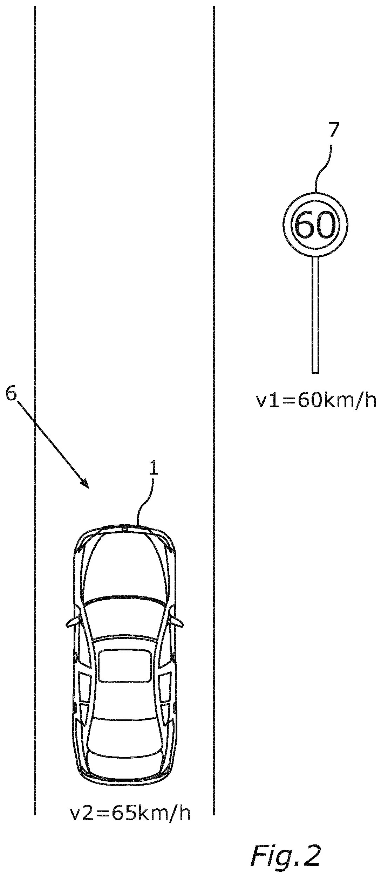

Das Fahrerassistenzsystem 2 umfasst eine Kamera 4, mittels welcher Informationen zu einer zulässigen Höchstgeschwindigkeit v1 auf einer Fahrbahn 6, auf welcher sich das Fahrzeug 1 aktuell befindet, erfasst werden können. Beispielsweise kann mit der Kamera 4 ein Verkehrszeichen 7 erfasst werden, welches die zulässige Höchstgeschwindigkeit v1 beschreibt (siehe Fig. 2). Darüber hinaus umfasst das Fahrerassistenzsystem 2 eine Recheneinrichtung 3, welche beispielsweise durch zumindest ein elektronisches Steuergerät des Fahrzeugs 1 gebildet sein kann. Diese Recheneinrichtung 3 ist zur Datenübertragung mit der Kamera 4 verbunden und kann somit Bilddaten, welche mit der Kamera 4 bereitgestellt werden, entsprechend auswerten.

Darüber hinaus umfasst das Fahrerassistenzsystem 2 eine erste Bedientaste SET, durch deren Betätigung der Fahrer eine erste Bedienhandlung durchführen kann. Zudem kann durch die Betätigung der Bedientaste SET bzw. durch die erste Bedienhandlung die Längsregelung des Fahrzeugs 1 mit Übernahme der aktuellen zulässigen Höchstgeschwindigkeit v1 aktiviert werden. Des Weiteren ist das Fahrerassistenzsystem 2 bzw. die Recheneinrichtung 3 dazu eingerichtet, eine zweite Bedienhandlung, welche von dem Fahrer nach dem Betätigen der Bedientaste SET durchgeführt wird, zu analysieren. Vorliegend ist beispielhaft eine zweite Bedientaste 8 gezeigt, an welcher der Fahrer die zweite Bedienhandlung durchführen kann. Grundsätzlich kann die zweite Bedienhandlung mehrere Bedienschritte bzw. das Betätigen von mehreren Bedientasten, das Durchführen von Sprachbefehlen, Bediengesten oder dergleichen umfassen.

Des Weiteren umfasst das Fahrerassistenzsystem 2 eine Ausgabeeinrichtung 9, mittels welcher ein Hinweis an den Fahrer ausgegeben werden kann. Dieser Hinweis kann optisch, akustisch und/oder haptisch ausgegeben werden. Dabei ist es vorgesehen, dass der Hinweis ausgegeben wird, wenn anhand der Analyse der zweiten Bedienhandlung erkannt wird, dass der Fahrer durch die zweite Bedienhandlung eine Anpassung der Sollgeschwindigkeit vornehmen möchte.

Fig. 2 zeigt beispielhaft eine Verkehrssituation, bei welcher sich das Fahrzeug 1 gemäß Fig. 1 auf einer Fahrbahn 6 befindet. Dieser Fahrbahn 6 ist eine zulässige Höchstgeschwindigkeit v1 von 60 km/h zugeordnet. Dies kann mittels der Kamera 4 des Fahrerassistenzsystems 2 anhand des Verkehrszeichens 7 erkannt werden. Vorliegend wird davon ausgegangen, dass sich das Fahrzeug 1 mit einer aktuellen Geschwindigkeit v2 von 65 km/h bewegt. Des Weiteren wird davon ausgegangen, dass der Fahrer die erste Bedientaste SET in der Erwartung betätigt, dass durch diese erste Bedienhandlung die aktuelle Geschwindigkeit v2 von 65 km/h in das Längsregelsystem übernommen wird. Tatsächlich wird durch die erste Bedienhandlung bzw. die Betätigung der Bedientaste SET das Fahrerassistenzsystem 2 mit dem aktuell gültigen Tempolimit v1 von 60 km/h aktiviert.

Ferner wird nach der Aktivierung der Längsregelung erkannt, dass der Fahrer durch die zweite Bedienhandlung die eingestellte Sollgeschwindigkeit von 60 km/h auf 65 km/h erhöhen möchte. Wenn dies beispielsweise wiederholt erkannt wird, kann dem Fahrer der Hinweis mittels der Ausgabeeinrichtung 9 ausgegeben werden. Alternativ kann der Nutzer eine weitere Funktion zur Anpassung der eingestellten Geschwindigkeit, beispielsweise 5 km/h über dem Tempolimit, angeboten werden. Alternativ kann vorgeschlagen werden, die Funktion zur Übernahme der aktuellen Höchstgeschwindigkeit zu deaktivieren.

Grundsätzlich kann eine Falschnutzung der Längsregelung des Fahrzeugs 1 auf Basis der Beobachtung des Nutzerverhaltens bzw. der zweiten Bedienhandlung erkannt werden. Hierbei kann das manuelle Korrigieren der eingestellten Sollgeschwindigkeit, beispielsweise in einem bestimmten Zeitraum nach der Betätigung der ersten Bedientaste SET, erkannt werden. Beispielsweise kann erkannt werden, dass die Sollgeschwindigkeit in Richtung der aktuellen Geschwindigkeit v2 des Fahrzeugs 1 verstellt wird. Alternativ dazu kann es vorgesehen sein, dass nach der Übernahme die Sollgeschwindigkeit manuell immer um den gleichen Geschwindigkeitswert erhöht oder erniedrigt wird. Es kann auch der Fall sein, dass nach der Übernahme immer das Fahrpedal zum Übersteuern der Längsregelung betätigt wird. Zudem kann der Anpassungswunsch der Sollgeschwindigkeit durch den Fahrer dadurch erkannt werden, dass bei einer Veränderung der Sollgeschwindigkeit bei einer Änderung der zulässigen Höchstgeschwindigkeit, dieser Vorschlag bestätigt wird oder sehr häufig auf den vorherigen Wert zurückgestellt wird.

Insgesamt können somit Situationen erkannt werden, in denen die durch die Betätigung der ersten Bedientaste SET eingestellte Sollgeschwindigkeit nicht der von dem Fahrer gewünschten Sollgeschwindigkeit entspricht. Durch die Analyse der zweiten Bedienhandlung kann insbesondere erkannt werden, dass der Fahrer die Einstellung, welche er durch die Betätigung der ersten Bedientaste SET vorgenommen hat, gar nicht durchführen wollte. Des Weiteren kann überprüft werden, ob es im Vergleich zu der zweiten Bedienhandlung eine einfachere Möglichkeit gibt, die Anpassung der Sollgeschwindigkeit vorzunehmen. Wenn dies der Fall ist, kann dem Fahrer der Hinweis ausgegeben werden. Damit können dem Fahrer bzw. Nutzer Vorschläge zur korrekten Bedienung und zur produktiven Nutzung der Längsregelfunktion bzw. der ersten Bedientaste SET bereitgestellt werden.

## Patentansprüche

1. Verfahren zum Betreiben eines Fahrerassistenzsystems (2) eines Fahrzeugs (1) mit den Schritten:
- Erfassen einer zulässigen Höchstgeschwindigkeit (v1) für eine Fahrbahn (6), auf welcher sich das Fahrzeug (1) aktuell bewegt,
- Erfassen von einer durch einen Fahrer des Fahrzeugs (1) durchgeführten ersten Bedienhandlung zur Aktivierung einer Längsregelung des Fahrzeugs (1),
- Durchführen der Längsregelung, wobei eine Sollgeschwindigkeit des Fahrzeugs (1) während der Längsregelung der zulässigen Höchstgeschwindigkeit (v1) entspricht,
- Analysieren einer zweiten Bedienhandlung des Fahrers, welche nach der ersten Bedienhandlung durchgeführt wird, und
- Ausgeben eines Hinweises an den Fahrer, falls anhand der Analyse der zweiten Bedienhandlung erkannt wird, dass der Fahrer durch die zweite Bedienhandlung eine Anpassung der Sollgeschwindigkeit vornehmen möchte, **dadurch gekennzeichnet, dass**
- die zweite Bedienhandlung mit einer Referenz-Bedienhandlung zur Anpassung der Sollgeschwindigkeit verglichen wird und der Hinweis ausgegeben wird, falls die Anpassung der Sollgeschwindigkeit durch die Referenz-Bedienhandlung im Vergleich zu der zweiten Bedienhandlung durch eine geringere Anzahl von Bedienschritten und/oder innerhalb einer kürzeren Zeitdauer erreicht wird.

2. Verfahren nach Anspruch 1,
**dadurch gekennzeichnet, dass**
der Hinweis, welcher an den Fahrer ausgegeben wird, die Referenz-Bedienhandlung beschreibt.

3. Verfahren nach einem der vorhergehenden Ansprüche,
**dadurch gekennzeichnet, dass**
der Hinweis ausgeben wird, falls die zweite Bedienhandlung innerhalb einer vorbestimmten Zeitdauer nach der ersten Bedienhandlung durchgeführt wird und/oder falls die zweite Bedienhandlung zum wiederholten Mal nach der ersten Bedienhandlung durchgeführt wird.

4. Verfahren nach einem der vorhergehenden Ansprüche,
**dadurch gekennzeichnet, dass**
dem Fahrer bei der Ausgabe des Hinweises eine Anpassung der Sollgeschwindigkeit um einen vorbestimmten Geschwindigkeitswert vorgeschlagen wird.

5. Verfahren nach einem der vorgehenden Ansprüche,
**dadurch gekennzeichnet, dass**
dem Fahrer bei der Ausgabe des Hinweises eine Anpassung oder Deaktivierung der mit der ersten Bedienhandlung verknüpften Längsregelung vorgeschlagen wird.

6. Verfahren nach einem der vorhergehenden Ansprüche,
**dadurch gekennzeichnet, dass**
erkannt wird, dass der Fahrer durch die zweite Bedienhandlung die Anpassung der Sollgeschwindigkeit vornehmen möchte, falls
- bei der zweiten Bedienhandlung die Sollgeschwindigkeit korrigiert wird,
- bei der zweiten Bedienhandlung ein Fahrpedal durch den Fahrer betätigt wird,
- bei der zweiten Bedienhandlung eine automatische Veränderung der Sollgeschwindigkeit bei einer Änderung der zulässigen Höchstgeschwindigkeit (v1) bestätigt wird, und/oder
- bei der automatische Veränderung der Sollgeschwindigkeit bei einer Änderung der zulässigen Höchstgeschwindigkeit (v1) bei der zweiten Bedienhandlung die veränderte Sollgeschwindigkeit angepasst wird.

7. Verfahren nach einem der vorhergehenden Ansprüche,
**dadurch gekennzeichnet, dass**
eine aktuelle Geschwindigkeit (v2) des Fahrzeugs (1) vor der ersten Bedienhandlung ermittelt wird und erkannt wird, dass der Fahrer durch die zweite Bedienhandlung die Anpassung der Sollgeschwindigkeit vornehmen möchte, falls bei der zweiten Bedienhandlung die Sollgeschwindigkeit an die aktuelle Geschwindigkeit (v2) angepasst wird.

8. Fahrerassistenzsystem (2) für ein Fahrzeug (1), wobei das Fahrerassistenzsystem (2) zum Durchführen eines Verfahrens nach einem der vorhergehenden Ansprüche eingerichtet ist.

9. Fahrzeug (1), insbesondere Personenkraftwagen, umfassend ein
Fahrerassistenzsystem (2) nach Anspruch 8.

## Claims

1. Method for operating a driver assistance system (2) of a vehicle (1) comprising the steps of:
detecting a maximum permissible speed (v1) for a roadway (6) on which the vehicle (1) is currently moving,
detecting a first operating action performed by a driver of the vehicle (1) for activating a longitudinal control of the vehicle (1),
performing the longitudinal control, wherein a target speed of the vehicle (1) during the longitudinal control corresponds to the maximum permissible speed (v1), analysing a second operating action of the driver which is performed after the first operating action, and
outputting a notification to the driver if it is recognised on the basis of the analysis of the second operating action that the driver wishes to perform an adjustment of the target speed by the second operating action,
**characterized in that**
the second operating action is compared with a reference operating action for adjusting the target speed and the notification is output if the adjustment of the target speed by the reference operating action is achieved in comparison to the second operating action by a smaller number of operating steps and/or within a shorter time duration.

2. Method according to claim 1,
**characterized in that**
the notification which is output to the driver describes the reference operating action.

3. Method according to one of the preceding claims,
**characterized in that**
the notification is output if the second operating action is performed within a predetermined time duration after the first operating action and/or if the second operating action is performed repeatedly after the first operating action.

4. Method according to one of the preceding claims,
**characterized in that**
an adjustment of the target speed by a predetermined speed value is proposed to the driver upon outputting the notification.

5. Method according to one of the preceding claims,
**characterized in that**
an adjustment or deactivation of the longitudinal control linked to the first operating action is proposed to the driver upon outputting the notification.

6. Method according to one of the preceding claims,
**characterized in that**
it is recognised that the driver wishes to perform the adjustment of the target speed by the second operating action if
the target speed is corrected in the second operating action,
an accelerator pedal is actuated by the driver in the second operating action,
an automatic change of the target speed upon a change of the maximum permissible speed (v1) is confirmed in the second operating action, and/or
the changed target speed is adjusted in the second operating action upon the automatic change of the target speed upon a change of the maximum permissible speed (v1).

7. Method according to one of the preceding claims,
**characterized in that**
a current speed (v2) of the vehicle (1) is determined before the first operating action and it is recognised that the driver wishes to perform the adjustment of the target speed by the second operating action if the target speed is adjusted to the current speed (v2) in the second operating action.

8. Driver assistance system (2) for a vehicle (1), wherein the driver assistance system (2) is configured to perform a method according to one of the preceding claims.

9. Vehicle (1), in particular passenger car, comprising a driver assistance system (2) according to claim 8.

## Revendications

1. Procédé pour faire fonctionner un système d'assistance au conducteur (2) d'un véhicule (1) comprenant les étapes de :
détection d'une vitesse maximale autorisée (v1) pour une chaussée (6) sur laquelle le véhicule (1) se déplace actuellement,
détection d'une première action de commande effectuée par un conducteur du véhicule (1) pour activer une régulation longitudinale du véhicule (1),
réalisation de la régulation longitudinale, une vitesse de consigne du véhicule (1) pendant la régulation longitudinale correspondant à la vitesse maximale autorisée (v1),
analyse d'une deuxième action de commande du conducteur qui est effectuée après la première action de commande, et
émission d'une indication au conducteur si, sur la base de l'analyse de la deuxième action de commande, il est reconnu que le conducteur souhaite effectuer un ajustement de la vitesse de consigne par la deuxième action de commande,
**caractérisé en ce que**
la deuxième action de commande est comparée avec une action de commande de référence pour ajuster la vitesse de consigne et l'indication est émise si l'ajustement de la vitesse de consigne par l'action de commande de référence est atteint par rapport à la deuxième action de commande par un nombre inférieur d'étapes de commande et/ou dans une durée plus courte.

2. Procédé selon la revendication 1,
**caractérisé en ce que**
l'indication qui est émise au conducteur décrit l'action de commande de référence.

3. Procédé selon l'une des revendications précédentes,
**caractérisé en ce que**
l'indication est émise si la deuxième action de commande est effectuée dans une durée prédéterminée après la première action de commande et/ou si la deuxième action de commande est effectuée de manière répétée après la première action de commande.

4. Procédé selon l'une des revendications précédentes,
**caractérisé en ce que**
un ajustement de la vitesse de consigne d'une valeur de vitesse prédéterminée est proposé au conducteur lors de l'émission de l'indication.

5. Procédé selon l'une des revendications précédentes,
**caractérisé en ce que**
un ajustement ou une désactivation de la régulation longitudinale liée à la première action de commande est proposé au conducteur lors de l'émission de l'indication.

6. Procédé selon l'une des revendications précédentes,
**caractérisé en ce que**
il est reconnu que le conducteur souhaite effectuer l'ajustement de la vitesse de consigne par la deuxième action de commande si
la vitesse de consigne est corrigée lors de la deuxième action de commande,
une pédale d'accélérateur est actionnée par le conducteur lors de la deuxième action de commande,
un changement automatique de la vitesse de consigne lors d'un changement de la vitesse maximale autorisée (v1) est confirmé lors de la deuxième action de commande, et/ou
la vitesse de consigne modifiée est ajustée lors de la deuxième action de commande lors du changement automatique de la vitesse de consigne lors d'un changement de la vitesse maximale autorisée (v1).

7. Procédé selon l'une des revendications précédentes,
**caractérisé en ce que**
une vitesse actuelle (v2) du véhicule (1) est déterminée avant la première action de commande et il est reconnu que le conducteur souhaite effectuer l'ajustement de la vitesse de consigne par la deuxième action de commande si la vitesse de consigne est ajustée à la vitesse actuelle (v2) lors de la deuxième action de commande.

8. Système d'assistance au conducteur (2) pour un véhicule (1), le système d'assistance au conducteur (2) étant configuré pour réaliser un procédé selon l'une des revendications précédentes.

9. Véhicule (1), en particulier voiture de tourisme, comprenant un système d'assistance au conducteur (2) selon la revendication 8.
